# EUROPÄISCHE PATENTSCHRIFT

(11) **EP 0 693 519 B1**
(45) Veröffentlichungstag und Bekanntmachung des Hinweises auf die Patenterteilung: **14.01.1998**
(21) Anmeldenummer: 95110222.7
(22) Anmeldetag: 30.06.1995
(51) Int. Cl.: C08G 75/32, C08L 11/00

(54) **Poly[2,5-bis(polysulfano)-1,3,4-thiadiazole]**
Poly 2,5-bis(polysulfano)-1,3,4-thiadiazole
Poly 2,5-bis(polysulfano)-1,3,4-thiadiazole

(30) Priorität: 13.07.1994 DE 4424680
(43) Veröffentlichungstag der Anmeldung: 24.01.1996
(73) Patentinhaber: RHEIN-CHEMIE RHEINAU GmbH, 68219 Mannheim (DE)
(72) Erfinder: Graf, Hans-Joachim, Dr., D-68219 Mannheim (DE); Schäfer, Volker, Dr., D-67122 Altrip (DE); Schilling, Kurt, D-68723 Schwetzingen (DE); Schudok, Clemens, Dr., D-69502 Hemsbach (DE)
(74) Vertreter: Gremm, Joachim, Dr.

(56) Entgegenhaltungen:
- EP-A- 0 455 030
- EP-A- 0 584 755
- US-A- 5 247 061
- US-A- 5 262 488
- PATENT ABSTRACTS OF JAPAN vol. 011 no. 085 (C-410) ,14.März 1987 & JP-A-61 238838 (KAGAKUHIN KENSA KYOKAI) 24.Oktober 1986,

## Beschreibung

Gegenstand der Erfindung sind Poly[2.5-bis(polysulfano)-1.3.4-thiadiazole] und ein Verfahren zu ihrer Herstellung. Die erfindungsgemäßen Thiadiazole haben die Formel 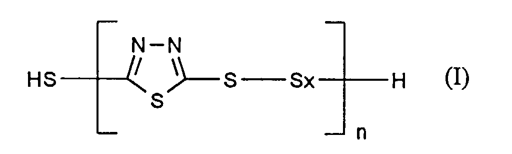 worin
- X: eine Zahl von 1 bis 10, bevorzugt 1 bis 3 und
- n: eine Zahl von 2 bis 1"000, bevorzugt 2 bis 100 und insbesondere von 4 bis 50 bedeutet.

Diese polymeren Thiadiazole sind feste Stoffe mit Schmelzpunkten im Bereich von 100 bis 200°C. Sie sind im allgemeinen gelb gefärbt.

Die Thiadiazole der Formel (I) können hergestellt werden durch Umsetzung von 2,5-Dimercapto-1,3,4-thiadiazol mit einem Dichlorpolysulfan. Im allgemeinen arbeitet man bei Temperaturen von 0 bis 100°C, bevorzugt 20 bis 50°C in einem stark alkalischen wäßrigen Medium. Die beiden Ausgangsprodukte werden im allgemeinen in etwa äquimolaren Mengen eingesetzt, ein Überschuß einer der beiden Komponenten ist natürlich möglich. Beide Ausgangsstoffe sind in dem Reaktionsmedium im allgemeinen löslich, das erhaltene Polymerisat ist unlöslich. Es fällt also während der Umsetzung aus und kann leicht abgetrennt werden.

Die Reaktion kann durch die folgende Reaktionsgleichung beschrieben werden: 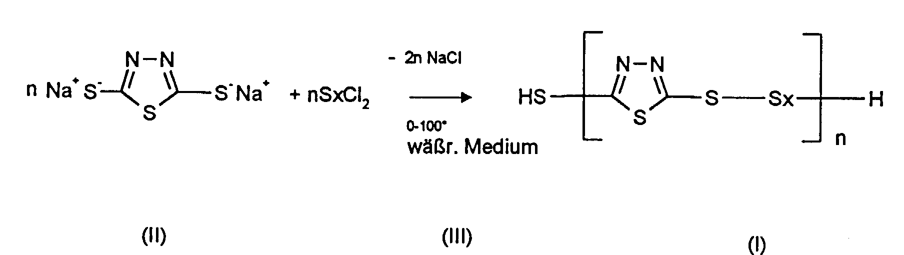 2,5-Dimercapto-1,3,4-thiadiazol (II) ist bekannt, ebenso sind Dichlorpolysulfane bekannt. S₂Cl₂ ist handelsüblich und solche mit höheren Schwefelgehalten werden daraus durch Erhitzen mit elementarem Schwefel hergestellt.

Zur Herstellung der erfindungsgemäßen Poly[2.5-bis(polysulfano)-1.3.4-thiadiazole] kann man zunächst das 2,5-Dimercapto-1,3,4-thiadiazol in Wasser oder einem überwiegend Wasser enthaltenden Lösungsgemisch, beispielsweise einem Gemisch von Wasser und Alkoholen in Gegenwart einer starken Base, z.B. Natronlauge, auflösen. Es bildet sich dabei das Salz der oben wiedergebenen Formel (II), wenn die Base NaOH ist. Danach gibt man das Dichlorpolysulfan in der entsprechenden Menge zu und erwärmt gegebenenfalls die Mischung. Die Polymerisationsreaktion ist exotherm, sodaß man gegebenenfalls im Laufe der Reaktion kühlen muß. Das gebildete Polymere der Formel (I) ist im Reaktionsmedium unlöslich, es fällt aus und kann direkt isoliert werden.

In der britischen Patentschrift 959 182 werden bestimmte dimere Derivate des 2-Mercapto-1,3,4-thiadiazols beschrieben. Auch hier wird von alkalischen Lösungen des 2-Mercapto-1,3,4-thiadiazols ausgegangen, allerdings andere Reaktionspartner verwendet.

Die erfindungsgemäßen Poly[2.5-bis(polysulfano)-1.3.4-thiadiazole] können zur Vulkanisation schwefelfreier Polychloroprene verwendet werden. Das hierfür bevorzugt verwendete Vulkanisationssystem enthält neben der Verbindung der Formel (I) Thiophosphat. Mit dieser Kombination werden Vulkanisateigenschaften erreicht, denen entsprechend,die mit den besten heute verfügbaren Vulkanisationssystemen erzielt werden .

### Beispiel 1

Zu einer Lösung von 40 g (1 mol) NaOH in 280 ml Wasser werden unter Rühren und Eiskühlung 75 g (0,5 mol) 2,5-Dimercapto-1,3,4-thiadiazol portionsweise zugegeben. Hierbei wird wärmefrei und es entsteht eine dunkle Lösung. Zu dieser Lösung wird ohne vorherige Aufarbeitung 67,5 g (0,5 mol) Dischwefeldichlorid innerhalb von ca. 40 min zugetropft, wobei die Temperatur durch Kühlen mit Eiswasser zwischen 10 und 30°C gehalten wird. Nach beendeter Zugabe wird 1 Stunde bei Zimmertemperatur nachgerührt und das in Wasser unlösliche Produkt abfiltriert. Der gelbe Feststoff wird mit Wasser gewaschen und im Vakuum bei ca. 80°C getrocknet.

| | |
|---|---|
| Ausbeute | ca. 95 g (entsprechend ca. 90 % d. Th., bezogen auf 2,5-Dimercapto-1,3,4-thiadiazol), Schmelzpunkt 146 - 168°C |
| (C₂N₂S₅)ₙ | ber.: C 11,3 %, H 0,00 %, N 13,2 %, S 75,2 % Cl 0,0 % |

### Beispiel 2

Zu der wäßrigen Lösung des Dinatriumsalzes von 2,5-Dimercapto-1,3,4-thiadiazol, hergestellt wie in Beispiel 1, werden 83,5 g (0,5 mol) S₃Cl₂ (hergestellt aus 67,5 g S₂Cl₂ und 16 g Schwefel) innerhalb von ca. 1 Stunde zugetropft, wobei die Temperatur durch Kühlen mit Eiswasser zwischen 10 und 30°C gehalten wird. Nach beendeter Zugabe wird eine Stunde bei Zimmertemperatur nachgerührt und das in Wasser unlösliche Produkt abfiltriert. Der gelbe Feststoff wird mit Wasser gewaschen und im Vakuum bei ca. 80°C getrocknet.

| | |
|---|---|
| Ausbeute | ca. 108 g (ca. 90 % d. Th., bezogen auf 2,5-Dimercapto-1,3,4-thiadiazol), Schmelzpunkt: 133 - 148°C |
| (C₂N₂S_{c})ₓ | ber.: C 9,8 %, H 0,00 %, N 11,5 %, S 78,7 % Cl 0,0 % geg: C 10,0 %, H 0,5 %, N 11.1 %, S 76,6 %, Cl 0,16 % |

### Beispiel 3

### Vulkanisation von schwefelfreiem Polychloropren:

Die folgenden Kautschukmischungen wurden hergestellt: (Zahlenangaben in der Tabelle sind Gewichtsteile:

**Tabelle 1**

| Zusammensetzung | A | B | C | D | E | F | G |
|---|---|---|---|---|---|---|---|
| Polychloropren | 100 | 100 | 100 | 100 | 100 | 100 | 100 |
| Magnesiumoxid | 2 | 2 | 2 | 2 | 2 | 2 | 2 |
| Octyliertes Diphenylamin | 2 | 2 | 2 | 2 | 2 | 2 | 2 |
| Pentaerythrit-bis-tetrahydro-benzaldehydacetal | 1 | 1 | 1 | 1 | 1 | 1 | 1 |
| Stearinsäure | 0,5 | 0,5 | 0,5 | 0,5 | 0,5 | 0,5 | 0,5 |
| Antiozonant Wachs | 2 | 2 | 2 | 2 | 2 | 2 | 2 |
| Polyethylenwachs | 3 | 3 | 3 | 3 | 3 | 3 | 3 |
| Ruß N550 | 20 | 20 | 20 | 20 | 20 | 20 | 20 |
| Ruß N330 | 10 | 10 | 10 | 10 | 10 | 10 | 10 |
| Durex O (Ruß) | 15 | 15 | 15 | 15 | 15 | 15 | 15 |
| Dioctylsebazat | 5 | 5 | 5 | 5 | 5 | 5 | 5 |
| hocharomatisches Weichmacheröl | 15 | 15 | 15 | 15 | 15 | 15 | 15 |
| Calciumoxid | 6 | 6 | 6 | 6 | 6 | 6 | 6 |
| ZnO | 6 | 6 | 6 | 6 | 6 | 6 | 6 |
| Dialkyldithiophosphorsäureaminsalz | 1 | 1 | 2 | - | - | - | - |
| Poly-[2,5-bis)polysulfono)]-1.3.4-thiadiazol | 0,9 | 2,7 | 0,9 | 2,7 | 1,8 | 1,8 | - |
| Dialkyldithiophosphorsäuresalz | - | - | - | - | 1 | 2 | - |
| Diethylharnstoff | - | - | - | - | - | - | 1,25 |

Formkörper aus einer Mischung wurden bei 170°C 10 Minuten lang vulkanisiert und folgende Werte- gemessen:

**Tabelle 2**

| | A | B | C | D | E | F | G |
|---|---|---|---|---|---|---|---|
| Dichte g/mm³) | 1,33 | | | | | | |
| Härte (Shore A) | 57 | 65 | 57 | 65 | 61 | 57 | 59 |
| Elastizität (%) | 44 | 48 | 44 | 49 | 45 | 45 | 49 |
| Reißfestigkeit | 19,2 | 14,8 | 19,2 | 14,9 | 17,9 | 20,1 | 14,1 |
| Modulus 100 (Mpa) | 2,2 | 3,2 | 2,2 | 3,5 | 2,7 | 2,4 | 3,5 |
| Modulus 300 (MPa) | 10 | 10 | 9,1 | 11,1 | 9,8 | 8,8 | - |
| Zugfestigkeit (MPa) | 14,2 | 12,3 | 12,9 | 11 | 12,6 | 12,1 | 10,3 |
| Dehnung (%) | 430 | 370 | 430 | 300 | 400 | 415 | 265 |

Nach 7 Tagen Lagerung in heißer Luft bei 100°C:

**Tabelle 3**

| | A | B | C | D | E | F | G |
|---|---|---|---|---|---|---|---|
| Härte (Shore A) (°ShA) | 63 | 71 | 62 | 70 | 66 | 64 | 62 |
| Elastizität (%) | 45 | 48 | 45 | 47 | 46 | 46 | 53 |
| Reißfestigkeit (N/mm) | 19,8 | 15 | 19,7 | 16,0 | 16,6 | 19,1 | 14,5 |
| Modulus 100 (MPa) | 3,1 | 5 | 5 | 4,9 | 3,9 | 3,6 | 2,7 |
| Modulus 300 (MPa) | 11 | - | - | - | - | - | 9,7 |
| Zugfestigkeit (MPa) | 12,1 | 9,6 | 10,8 | 9,2 | 8,9 | 10,4 | 10,8 |
| Dehnung (%) | 335 | 205 | 300 | 200 | 225 | 280 | 335 |

## Patentansprüche

1. Poly[2.5-bis(polysulfano)-1.3.4-thiadiazole] der Formel 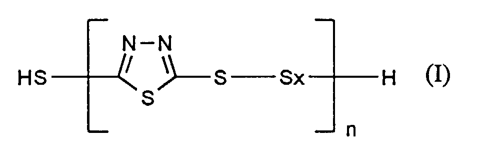 worin
X eine Zahl von 1 bis 10 und
n eine Zahl von 2 bis 1 000 bedeuten.

2. Verfahren zur Herstellung der Polythiadiazole der Formel (I) des Anspruchs 1, dadurch gekennzeichnet, daß man 2,5-Dimercapto-1,3,4-thiadiazol in stark alkalischem wäßrigen Milieu mit Dichlorpolysulfan bei Temperaturen von 0 bis 100°C umsetzt.

3. Verwendung der Polythiadiazole der Formel (I) aus Anspruch 1 als Vulkanisationsmittel zur Vulkanisation schwefelfreier Polychloroprene.

## Claims

1. Poly[2,5-bis(polysulphano)-1,3,4-thiadiazoles] corresponding to the formula 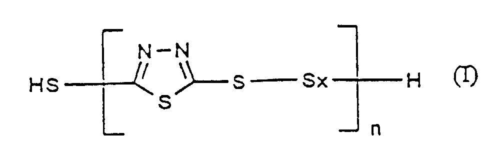 wherein
x denotes a number from 1 to 10 and
n denotes a number from 2 to 1,000.

2. A process for the preparation of the polythiadiazoles corresponding to formula (I) of claim 1, characterised in that 2,5-dimercapto-1,3,4-thiadiazole is reacted in strongly alkaline aqueous medium with dichloropolysulphane at temperatures of from 0°C to 100°C.

3. The use of the polythiadiazoles corresponding to formula (I) from claim 1 as vulcanising agents for the vulcanisation of sulphur-free polychloroprenes.

## Revendications

1. Poly[2,5-bis(polysulfano)-1,3,4-thiadiazoles] de formule 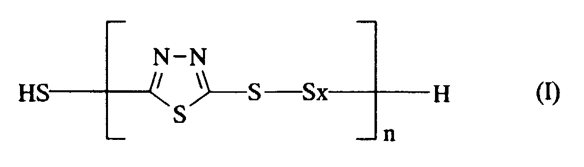 dans laquelle
X est un nombre allant de 1 à 10 et
n un nombre allant de 2 à 1 000.

2. Procédé de préparation des polythiadiazoles de formule (I) de la revendication 1, caractérisé en ce que l'on fait réagir le 2,5-dimercapto-1,3,4-thiadiazole en milieu aqueux fortement alcalin avec un dichloropolysulfane à des températures de 0 à 100°C.

3. Utilisation des polythiadiazoles de formule (I) de la revendication 1 en tant qu'agents vulcanisants pour la vulcanisdation de polychloroprènes exempts de soufre.
